# EUROPÄISCHE PATENTANMELDUNG

(11) **EP 4 656 445 A1**
(43) Veröffentlichungstag der Anmeldung: **03.12.2025**
(21) Anmeldenummer: 25166620.2
(22) Anmeldetag: 27.03.2025
(51) Int. Cl.: B60L 53/30, B60L 53/66

(54) **VERFAHREN ZUM LADEN EINES ELEKTRISCHEN KRAFTFAHRZEUGS**

(30) Priorität: 30.05.2024 DE 102024205042
(71) Anmelder: VOLKSWAGEN AG, 38440 Wolfsburg (DE)
(72) Erfinder: Stichowski, Torsten, 38440 Wolfsburg (DE); Borngräber, Ralf, 38440 Wolfsburg (DE)

(57) **Zusammenfassung**

Ein Verfahren zum Laden eines elektrischen Kraftfahrzeugs an einer Ladestation, wobei eine Kommunikationsverbindung zwischen dem Kraftfahrzeug und der Ladestation hergestellt wird, über die eine Freigabe eines Ladevorgangs durch eine Verknüpfung mit Berechtigungsdaten bewirkt wird, ist dadurch gekennzeichnet, dass die Berechtigungsdaten in dem Kraftfahrzeug nicht gespeichert sind und durch eine Interaktion mit einer Person die Berechtigungsdaten mit dem Kraftfahrzeug verknüpft werden.

## Beschreibung

Die Erfindung betrifft ein Verfahren zum Laden eines elektrischen Kraftfahrzeugs an einer Ladestation.

Als "elektrisches Kraftfahrzeug" gilt erfindungsgemäß ein Kraftfahrzeug, das zumindest einen elektrischen Traktionsmotor umfasst, durch den ein alleiniger Antrieb des Kraftfahrzeugs möglich ist. Dabei kann das Kraftfahrzeug ausschließlich den mindestens einen elektrischen Traktionsmotor umfassen ("Elektrofahrzeug") oder der mindestens eine elektrische Traktionsmotor kann zusätzlich zu einer anderen Antriebsvorrichtung, insbesondere einer Brennkraftmaschine, vorgesehen sein ("Hybridfahrzeug"). Eine Versorgung des mindestens einen elektrischen Traktionsmotors eines solchen elektrischen Kraftfahrzeugs erfolgt üblicherweise durch eine (Traktions-)Batterie. Für ein Laden einer solchen Traktionsbatterie umfasst ein elektrisches Kraftfahrzeug üblicherweise einen Ladeanschluss mit einem Steckverbinder, an den ein Gegensteckverbinder einer externen Ladestation anschließbar ist. Für ein Laden der Traktionsbatterie eines elektrischen Kraftfahrzeugs an einer öffentlich zugänglichen Ladestation ist eine Freigabe eines Ladevorgangs seitens der Ladestation erforderlich. Hierzu wird von der Ladestation geprüft, ob eine Berechtigung zur Nutzung gegeben ist, was üblicherweise zumindest auch eine Freigabe von mit der Berechtigung verknüpften Daten zur Bezahlung der während des Ladevorgangs bezogenen elektrischen Energie bedingt.

Für ein möglichst komfortables Laden eines Kraftfahrzeugs ist eine üblicherweise als Plug&Charge bezeichnete Funktion bekannt, bei der eine Berechtigung zur Nutzung einer Ladestation und die dafür erforderlichen Daten in dem Kraftfahrzeug gespeichert sind und beispielsweise bei einem Verbinden eines Ladeanschlusses des Kraftfahrzeugs mit der Ladestation an diese übertragen werden, so dass unmittelbar beziehungsweise ohne weitere Interaktion seitens einer dem Kraftfahrzeug zugeordneten Person ein Laden der Traktionsbatterie erfolgen kann (vgl. EP 4 219 225 A1). Zur Nutzung dieser Plug&Charge-Funktion muss von einer Person, insbesondere dem Eigentümer des Kraftfahrzeugs, üblicherweise ein entsprechender Ladevertrag mit einem Ladestation-Betreiber geschlossen und dieser Vertrag dann dem Kraftfahrzeug zugeordnet werden.

Nachteilig daran ist, dass der Ladevertrag dann an das Kraftfahrzeug gekoppelt ist. Diesen Ladevertrag kann der Eigentümer daher nicht ohne weiteres für ein Laden eines anderen Kraftfahrzeugs, beispielsweise eines gemieteten Kraftfahrzeugs, nutzen.

Die WO 2020/256305 A1 offenbart ein Verfahren, das einem Fahrer eines elektrischen Mietfahrzeugs eine Fahrtroute mit Touristenattraktionen vorschlägt und den Fahrer durch Gamification veranlasst, an einer Touristenattraktion relativ lange zu verweilen, während das bidirektional ladbare Mietfahrzeug an einer Strombörse partizipiert.

Der Erfindung liegt die Aufgabe zugrunde, eine möglichst komfortable, fahrzeugunabhängige Nutzung eines Ladevertrags zu ermöglichen.

Diese Aufgabe ist durch ein Verfahren gemäß dem Patentanspruch 1 sowie bei einer Ladesteuerungsvorrichtung gemäß dem Patentanspruch 6 gelöst.

Erfindungsgemäß ist ein Verfahren zum Laden eines elektrischen Kraftfahrzeugs an einer Ladestation vorgesehen, wobei eine Kommunikationsverbindung für einen Datenaustausch zwischen dem Kraftfahrzeug und der Ladestation hergestellt wird, über die eine Freigabe eines Ladevorgangs durch eine Verknüpfung des Ladevorgangs mit Berechtigungsdaten bewirkt wird. Die Berechtigungsdaten sind solche Daten, die der Ladestation signalisieren, dass ein Ladevorgang durchgeführt werden kann.

Vorzugsweise kann vorgesehen sein, dass die Berechtigungsdaten Daten bezüglich eines Ladevertrags und/oder Bezahldaten sind oder umfassen. Als "Ladevertrag" gilt ein Vertrag zwischen einer (natürlichen oder juristischen) Person, die dem Kraftfahrzeug zugeordnet ist, und einer der Ladestation zugeordneten (natürlichen oder juristischen) Person, die die Ladestation betreibt und damit die für das Laden des Kraftfahrzeugs erforderliche elektrische Energie bereitstellt. "Bezahldaten" sind solche Daten, die es der Ladestation beziehungsweise der dieser zugeordneten Person ermöglichen, Kosten für die Bereitstellung der elektrischen Energie zumindest abzurechnen und insbesondere unmittelbar eine Zahlung dafür zu veranlassen.

Das Verfahren ist erfindungsgemäß dadurch gekennzeichnet, dass die Berechtigungsdaten in dem Kraftfahrzeug nicht gespeichert sind, sondern diese vielmehr erst durch eine definierte Interaktion mit einer dem Kraftfahrzeug zugeordneten Person mit dem Kraftfahrzeug verknüpft werden. Als Interaktion gilt dabei grundsätzlich jedes Interagieren des Kraftfahrzeugs mit der Person, wobei diese Interaktion direkt oder indirekt, dann insbesondere über eine der Person zugeordnete, nicht Teil des Kraftfahrzeugs darstellende Vorrichtung, erfolgen kann.

Das erfindungsgemäße Verfahren sieht demnach vor, die Berechtigungsdaten nicht dauerhaft dem Kraftfahrzeug, sondern der Person zuzuordnen. Eine Zuordnung beziehungsweise Verknüpfung der Berechtigungsdaten mit dem Kraftfahrzeug erfolgt dagegen nur für einen Ladevorgang, wobei zudem vorgesehen ist, dass eine Kommunikation zur Übermittlung der Berechtigungsdaten an die Ladestation über das Kraftfahrzeug als Kommunikationsstelle erfolgt, was ein komfortables, gegebenenfalls seitens der dem Kraftfahrzeug zugeordneten Person interaktionsfreies Laden des Kraftfahrzeugs ermöglicht, wie es von der bekannten Plug&Charge-Funktion bekannt ist.

Eine zur Durchführung eines erfindungsgemäßen Verfahrens eingerichtete Ladesteuerungsvorrichtung für ein elektrisches Kraftfahrzeug umfasst zumindest eine erste Kommunikationsschnittstelle, die zur Bereitstellung einer Kommunikationsverbindung mit der Ladestation eingerichtet ist, und eine zweite Kommunikationsschnittstelle, die für eine Interaktion mit einer dem Kraftfahrzeug zugeordneten Person eingerichtet ist, wobei die Ladesteuerungsvorrichtung weiterhin dazu eingerichtet ist, Berechtigungsdaten zur Freigabe eines Kraftfahrzeugs durch die Interaktion mit der Person zu empfangen und an die Ladestation zu übermitteln.

Die Erfindung betrifft auch ein elektrisches Kraftfahrzeug mit einer solchen Ladesteuerungsvorrichtung. Das Kraftfahrzeug umfasst weiterhin zumindest einen elektrischen Traktionsmotor sowie eine Traktionsbatterie. Bei dem Kraftfahrzeug kann es sich insbesondere um ein radbasiertes und nicht schienengebundenes Kraftfahrzeug (vorzugsweise ein PKW, Bus oder ein LKW) handeln.

Gemäß einer bevorzugten Ausführungsform des erfindungsgemäßen Verfahrens sowie einer vorteilhaften Ausgestaltungsform der erfindungsgemäßen Ladesteuerungsvorrichtung kann vorgesehen sein, dass die Verknüpfung der Berechtigungsdaten mit dem Kraftfahrzeug für nur den einen Ladevorgang oder eine definiert begrenzte oder unbegrenzte Mehrzahl von Ladevorgängen (einschließlich des konkreten Ladevorgangs) mit dem konkreten Kraftfahrzeug oder für einen definiert begrenzten oder unbegrenzten Zeitraum erfolgt. Dabei kann vorgesehen sein, dass eine entsprechende Auswahl von der Person im Rahmen der Interaktion getroffen werden kann oder bereits vorab getroffen wurde.

Für eine indirekte Interaktion des Kraftfahrzeugs mit der Person kann vorzugsweise vorgesehen sein, dass die Berechtigungsdaten auf einem Mobilkommunikationsgerät, das der dem Kraftfahrzeug zugeordneten Person zugeordnet und mit dem Kraftfahrzeug kommunikativ verbunden ist, gespeichert und/oder von dem Mobilkommunikationsgerät von einem (fahrzeug-)externen Datenspeicher abgerufen und an das Kraftfahrzeug übertragen werden. Die erfindungsgemäße Ladesteuerungsvorrichtung kann dazu vorzugsweise derart ausgestaltet sein, dass die zweite Kommunikationsschnittstelle zur Bereitstellung einer Kommunikationsverbindung mit dem Mobilkommunikationsgerät eingerichtet ist.

Das Mobilkommunikationsgerät kann vorzugsweise einen üblichen Datenübertragungsstandard, beispielsweise 4G oder 5G, für eine Datenübertragung nutzen. Das Mobilkommunikationsgerät kann insbesondere ein konventionelles Mobiltelefon beziehungsweise Smartphone, gegebenenfalls mit einer für die Interaktion spezifisch vorgesehenen Applikation ("App"), sein. Der Datenspeicher kann insbesondere im Besitz, insbesondere auch im Eigentum der Person, die der Ladestation zugeordnet ist, sein.

Für eine direkte Interaktion des Kraftfahrzeugs mit der dem Kraftfahrzeug zugeordneten Person kann vorzugsweise vorgesehen sein, dass das Kraftfahrzeug ein Bediensystem aufweist, das basierend auf einer Interaktion mit der dem Kraftfahrzeug zugeordneten Person die Berechtigungsdaten von einem externen Datenspeicher abruft. Für den Datenabruf kann das Bediensystem vorzugsweise eine eigene beziehungsweise von der Ladesteuerungsvorrichtung umfasste Datenübertragungseinrichtung, die vorzugsweise einen üblichen Datenübertragungsstandard, beispielsweise 4G oder 5G, für eine Datenübertragung nutzen kann, verwenden. Ergänzend oder alternativ kann auch eine von dem Mobilkommunikationsgerät bereitgestellte Datenübertragungsfunktion genutzt werden. Eine erfindungsgemäße Ladesteuerungsvorrichtung kann dazu vorzugsweise derart ausgestaltet sein, dass die zweite Kommunikationsschnittstelle ein Bediensystem aufweist, das dazu eingerichtet ist, basierend auf einer Interaktion mit der Person die Berechtigungsdaten von einem externen Datenspeicher abzurufen. De Interaktion kann eine Eingabe von Daten durch die Person an einer Eingabevorrichtung, beispielsweise einem Bildschirm, des Bediensystems umfassen. Auch eine Spracheingabe der Daten kann alternativ oder ergänzend vorgesehen sein.

Eine direkte oder indirekte Interaktion der Ladesteuerungsvorrichtung mit der dem Kraftfahrzeug zugeordneten Person kann eine Authentifizierung der Person durch das Mobilkommunikationsgerät, beispielsweise durch eine Eingabe einer PIN und/oder eines Passworts und/oder mittels einer Gesichts- und/oder Fingerabdruckerkennung, umfassen, bevor die Berechtigungsdaten an das Kraftfahrzeug übertragen werden.

## Patentansprüche

1. Verfahren zum Laden eines elektrischen Kraftfahrzeugs an einer Ladestation, wobei eine Kommunikationsverbindung zwischen dem Kraftfahrzeug und der Ladestation hergestellt wird, über die eine Freigabe eines Ladevorgangs durch eine Verknüpfung mit Berechtigungsdaten bewirkt wird, **dadurch gekennzeichnet, dass** die Berechtigungsdaten in dem Kraftfahrzeug nicht gespeichert sind und durch eine Interaktion mit einer Person die Berechtigungsdaten mit dem Kraftfahrzeug verknüpft werden.

2. Verfahren gemäß Anspruch 1, **dadurch gekennzeichnet, dass** die Verknüpfung der Berechtigungsdaten mit dem Kraftfahrzeug für nur den einen Ladevorgang oder eine definiert begrenzte oder unbegrenzte Mehrzahl von Ladevorgängen mit dem Kraftfahrzeug oder für einen definiert begrenzten oder unbegrenzten Zeitraum erfolgt.

3. Verfahren gemäß Anspruch 1 oder 2, **dadurch gekennzeichnet, dass** die Berechtigungsdaten auf einem der Person zugeordneten und mit dem Kraftfahrzeug kommunikativ verbundenen Mobilkommunikationsgerät gespeichert und/oder von dem Mobilkommunikationsgerät von einem externen Datenspeicher abgerufen werden.

4. Verfahren gemäß einem der vorhergehenden Ansprüche, **dadurch gekennzeichnet, dass** das Kraftfahrzeug ein Bediensystem aufweist, das basierend auf einer Interaktion mit der Person die Berechtigungsdaten von einem externen Datenspeicher abruft.

5. Verfahren gemäß Anspruch 4, **dadurch gekennzeichnet, dass** die Interaktion eine Eingabe von Daten durch die Person an einer Eingabevorrichtung des Bediensystems umfasst.

6. Ladesteuerungsvorrichtung für ein elektrisches Kraftfahrzeug mit einer ersten Kommunikationsschnittstelle, die zur Bereitstellung einer Kommunikationsverbindung mit einer Ladestation eingerichtet ist, und einer zweiten Kommunikationsschnittstelle, die für eine Interaktion mit einer Person eingerichtet ist, **dadurch gekennzeichnet, dass** die Ladesteuerungsvorrichtung weiterhin dazu eingerichtet ist, Berechtigungsdaten zur Freigabe eines Kraftfahrzeugs durch die Interaktion mit der Person zu empfangen und an die Ladestation zu übermitteln.

7. Ladesteuerungsvorrichtung gemäß Anspruch 6, **dadurch gekennzeichnet, dass** die zweite Kommunikationsschnittstelle zur Bereitstellung einer Kommunikationsverbindung mit einem der Person zugeordneten Mobilkommunikationsgerät eingerichtet ist.

8. Ladesteuerungsvorrichtung gemäß Anspruch 6 oder 7, **dadurch gekennzeichnet, dass** die zweite Kommunikationsschnittstelle ein Bediensystem aufweist, das dazu eingerichtet ist, basierend auf einer Interaktion mit der Person die Berechtigungsdaten von einem externen Datenspeicher abzurufen.

9. Ladesteuerungsvorrichtung gemäß Anspruch 8, **dadurch gekennzeichnet, dass** das Bediensystem eine Eingabevorrichtung zur Eingabe von Daten durch die Person umfasst.

10. Verfahren gemäß einem der Ansprüche 1 bis 5 oder Ladesteuerungsvorrichtung gemäß einem der Ansprüche 6 bis 9, **dadurch gekennzeichnet, dass** die Berechtigungsdaten Daten bezüglich eines Ladevertrags und/oder Bezahldaten sind oder umfassen.
